# EUROPEAN PATENT APPLICATION

(11) **EP 3 695 757 A1**
(43) Date of publication of application: **19.08.2020**
(21) Application number: 19189626.5
(22) Date of filing: 01.08.2019
(51) Int. Cl.: A47J 31/18, A47J 31/52

(54) **SMART TEA BREWING**

(30) Priority: 15.02.2019 WO PCT/CN2019/075248
(71) Applicant: Koninklijke Philips N.V., 5656 AG Eindhoven (NL)
(72) Inventor: TAN, Jingwei, 5656 AE Eindhoven (NL); ZHAO, Benjamin, 5656 AE Eindhoven (NL); CHEN, Yun, 5656 AE Eindhoven (NL)
(74) Representative: de Haan, Poul Erik

(57) **Abstract**

A tea brewing apparatus (10) is disclosed comprising a brewing compartment (20) for holding tea leaves; a sensor (22) for sensing a parameter indicative of a concentration of one or more solutes in a tea soup within the brewing compartment; a controller (50) communicatively coupled to the sensor; and a user interface (60) communicatively coupled to the controller and comprising a tea strength selection menu for allowing a user to specify a desired strength of the tea soup. The controller is adapted to obtain a target value of said parameter based on the desired strength of the tea soup specified by the user; monitor said parameter during a brewing process of said tea soup within the brewing compartment; and generate a signal for signalling that the brewed tea soup has said desired strength when said parameter has reached said target value. Also disclosed is a method of monitoring a tea brewing process of such a tea brewing apparatus (10).

## Description

### FIELD OF THE INVENTION

The present invention relates to a tea brewing apparatus comprising a brewing compartment for holding tea leaves.

The present invention further relates to a method of monitoring a tea brewing process of such a tea brewing apparatus.

### BACKGROUND OF THE INVENTION

In many cultures, drinking tea forms an integral part of the customs within these cultures. This is not only because of the perceived pleasant taste of the tea, but also because drinking tea is believed to have some health benefits, for example because tea can be rich in anti-oxidants, which are considered by some to positively contribute to boosting a person's immune system, reduce fatigue, improve mood and even reduce the risk of attracting diseases such as certain types of cancer. Although not all of these assumed health benefits find solid basis in scientific evidence, they nevertheless have contributed to the popularity of tea as a daily beverage.

In order to make the tea as appetizing as possible, it is important that the tea is properly brewed. This may be achieved in part by using high quality tea leaves, but the actual brewing process is equally important. This is because during the brewing process, chemicals such as polyphenols, caffeine and amino acids are released from the tea leaves into the tea soup, i.e. the brewing liquid, and the concentration of these solutes in the tea soup determine the taste of the tea soup as perceived by its drinker. For example, polyphenols have a bitter and astringent taste, caffeine provides a bitter taste and amino acids enhance the umami or savoury taste of the tea soup.

Hence, it is important to control the brewing process such that these chemicals are dissolved into the tea soup in the appropriate amounts or balance to ensure a pleasantly tasting tea after the brewing process. If the tea soup is insufficiently brewed, a weak tasting tea may be perceived by the drinker, whereas a tea soup that has been brewed for too long can lead to a tea that is perceived as being acrid or overly bitter. However, it is difficult for a person to control the tea brewing time such as to brew a pot or a cup of tea to the preferred strength or taste. This often is a trial and error exercise, which is of course unsatisfactory from a user perspective.

In CN 107898316 A, an intelligent tea brewing system is disclosed that comprises a weighing module for measuring tea leaf weight information, a camera shooting module which is for obtaining tea leaf image information, a database in which several kinds of tea leaf type data and brewing requirement data of each type of tea leaves are stored, a main control module, an image recognition unit electrically connected with the main control module and a brewing and heating device. The image recognition unit analyzes the image information, judges the type of tea leaves to be measured in the database based on a classifier and obtains the tea brewing requirement data based on the type of tea leaves, the main control module is electrically connected with the brewing and heating device to control the brewing and heating device to run according to the tea brewing requirement data, and parameters of tea brewing duration/the temperature/the water adding amount and the like are controlled. The types of tea leaves can be automatically recognized, the water adding amount, the water temperature and the brewing duration can be accurately controlled according to the weight of tea leaves, such that for an untrained user, good tea can be brewed by operating the system simply according to instructions.

However, such a system has a number of limitations. For instance, the automatic recognition of the type of tea cannot accurately determine the quality of the tea leaves, such that for a fixed brewing period based on the recognized tea leaves a variation in taste of the tea soup can still occur. Also, different users may have different taste preferences, which cannot be easily met using such a system.

### SUMMARY OF THE INVENTION

The present invention seeks to provide a tea brewing apparatus comprising a brewing compartment for holding tea leaves that control a tea brewing process such that a desired taste of the brewed tea soup can be accurately controlled.

The present invention further relates to a method of monitoring a tea brewing process of such a tea brewing apparatus in order to facilitate accurately control of the taste of the brewed tea soup.

According to an aspect, there is provided a tea brewing apparatus comprising a brewing compartment for holding tea leaves; a sensor for sensing a parameter indicative of a concentration of one or more solutes in a tea soup within the brewing compartment; a controller communicatively coupled to the sensor; and a user interface communicatively coupled to the controller and comprising a tea strength selection menu for allowing a user to specify a desired strength of the tea soup; wherein the controller is adapted to obtain a target value of said parameter based on the desired strength of the tea soup specified by the user; monitor said parameter during a brewing process of said tea soup within the brewing compartment; and generate a signal for signalling that the brewed tea soup has said desired strength when said parameter has reached said target value.

The present invention is based on the realization that the brewing time of a tea soup, that is, the liquid brewed when exposing water having an elevated temperature relative to room temperature directly or indirectly to tea leaves, e.g. loose leaves or leaves in a tea bag, in order to achieve a tea soup with the desired strength can be accurately determined by sensing the concentration of one or more solutes in the tea soup during the brewing process. This has the advantage that the during of the brewing process is controlled based on the actual properties of the tea soup rather than by controlling the brewing process using time as a control parameter, which improves the control over the taste of the brewed tea soup. Moreover, because a user can select a desired strength of the tea soup through the user interface of the tea brewing apparatus, a more fine-grained control over the taste of the end product, i.e. the brewed tea soup after the brewing process, is provided.

The target value of the parameter monitored by the controller may be preprogrammed into the tea brewing apparatus such that an end user does not have to get involved with defining this target value, thereby improving ease of use of the tea brewing apparatus. Alternatively, the target value may be programmable through the user interface, which allows for a further personalization of the tea soup flavour, as the user can define the target value, e.g. based on past experiences, to ensure that the tea soup is brewed to the personal taste of the end user.

In a preferred embodiment, the parameter is a Brix value, and wherein the parameter is indicative of the total concentration of solutes in the tea soup. The monitoring of a Brix value has a number of distinct advantages. For instance, it has been found that the Brix value of a tea soup shows a strong correlation to its flavour, independent of tea variety and water properties such as water hardness and pH. This means that a single target value may be used for the Brix parameter in order to ensure that a tea soup has the desired taste properties, without having to consider additional variables such as tea variety and water properties. For instance, the tea strength selection menu may include a weak tea strength option corresponding to the Brix parameter target value being in a range of 0.2-0.3, a normal tea strength option corresponding to the Brix parameter target value being in a range of 0.3-0.4 and a strong tea strength option corresponding to the Brix parameter target value being in a range of 0.4-0.5.

The Brix parameter may be sensed with the sensor directly or indirectly. Preferably, the sensor is a Brix sensor such as a specific gravity sensor, a refractometer or a spectrometer adapted to measure infrared absorption such that the Brix value of the tea soup can be measured directly. However, the inventors have found that other types of parameters, such as pH and electrical conductivity (EC) show a correlation with the Brix value of the tea soup, such that the Brix value may be indirectly determined using for example a pH sensor or an electrical conductivity sensor. At this point, it is noted that in the context of the present application, a sensor adapted to sense the concentration of one or more solutes in the tea soup includes pH sensors, as the hydronium or H⁺ ions sensed by such a sensor are considered solutes within the tea soup.

Where the sensor is one of a pH sensor and an electrical conductivity sensor, the target value is a function of tea type and tea strength. This is because it has been found by the inventors that, in contrast to the Brix value, the pH or EC value of the tea soup typically are a function of both tea strength and tea variety. Of course, it should be understood that where a pH sensor or an electrical conductivity sensor is used within the tea brewing apparatus, the target value may be expressed as a pH or EC value rather than a Brix value.

Where the sensor is one of a pH sensor and an electrical conductivity sensor, the user interface may further comprise a tea type selection menu for allowing a user to specify a tea type, and wherein the controller may be adapted to obtain the target value of said parameter based on the desired strength of the tea soup and the tea type specified by the user. This ensures that the correct target value for a particular type or variety of tea is used in the tea brewing process.

In an embodiment, the user interface further comprises a temperature selection option for allowing a user to select a temperature at which said brewing process is performed, and wherein the target value further is a function of the selected temperature. This is based on the insight that the target value of the pH and the electrical conductivity of the tea soup are to some extent also a function of the temperature at which the tea soup is brewed, such that improved control over the properties of the tea soup after brewing is obtained by also allowing a user to define the brewing temperature of the tea soup.

The tea brewing apparatus preferably further comprises a heating element thermally coupled to the brewing compartment under control of the controller.

The controller may be adapted to maintain a temperature of the tea soup within a range of 30-65°C with the heating element during the brewing process. It has been found that when the tea soup is brewed at a temperature within this range, the release of solutes from the tea leaves such as polyphenols, caffeine and amino acids can be achieved in a desirable ratio, thereby further improving the perceived taste of the tea soup after brewing.

The controller further may be adapted to maintain a temperature of the tea soup at least at 50°C with the heating element upon completion of the brewing process such that the tea soup is kept at a desirable drinking temperature for the end user.

The controller may be further adapted to generate a user instruction with the user interface for instructing a user to add tea leaves and water to the brewing compartment by weight in a ratio of 1:10 - 1:100, preferably in a ratio of 1:50 to ensure optimal brewing results at the aforementioned brewing temperature.

Upon completion of the brewing process, the signal generated by the controller may be used to alert the user to remove the tea leaves from the tea soup such as to terminate the brewing process. For example, the tea brewing apparatus may have a sensory output device, which may be a discrete device or form part of the user interface, through which the signal causes the generation of a sensory output signal such as a visible, audible or tactile output for signalling the end of the tea brewing process. Alternatively, the tea brewing apparatus may further comprise a mechanism for separating the tea leaves from the tea soup responsive to said signal such that contact between the tea leaves and the tea soup is automatically terminated upon the controller generating the signal signalling the end of the tea brewing process.

In an example embodiment, the mechanism comprises a motorized retractable tea leaf holder, and wherein said signal causes the motorized retraction of the tea leaf holder from the tea soup in the brewing compartment. This has the advantage that the user does not have to intervene in order to terminate the tea brewing process, which therefore avoids the risk that the user terminates the tea brewing process too early or too late, which could lead to the brewing of a suboptimal tea soup.

According to another aspect, there is provided a method of monitoring a tea brewing process of a tea brewing apparatus comprising a brewing compartment for holding tea leaves and a sensor for sensing a parameter indicative of a concentration of one or more solutes in a tea soup within the brewing compartment, the method comprising obtaining a target value of said parameter based on a desired strength of the tea soup specified by a user; receiving a value of said parameter from said sensor during a brewing process of said tea soup within the brewing compartment; and generating a signal for signalling that the brewed tea soup has said desired strength when the value of said parameter has reached said target value. With such a method, a tea soup may be brewed to the desired strength without having to accurately control the brewing time as explained in more detail above. It is noted that such a method is not necessarily implemented by a standalone tea brewing apparatus. As an alternative, the method may at least be partially be implemented on a mobile communication device such as a smart phone or a tablet in communication with the tea brewing apparatus.

The sensor preferably is a Brix sensor although alternatively the sensor may be one of a pH sensor and an electrical conductivity sensor, wherein the target value is a function of tea type and tea strength as explained in more detail above.

### BRIEF DESCRIPTION OF THE DRAWINGS

Embodiments of the invention are described in more detail and by way of non-limiting examples with reference to the accompanying drawings, wherein:
FIG. 1 schematically depicts a cross-sectional view of a tea brewing apparatus according to an example embodiment;
FIG. 2 is a graph depicting a correlation between Brix value (°) and polyphenol concentration in a tea soup;
FIG. 3 is a graph depicting a correlation between Brix value (°) and caffeine concentration in a tea soup;
FIG. 4 is a graph depicting a correlation between Brix value (°) and free amino acid concentration in a tea soup;
FIG. 5 is a graph depicting a correlation between Brix value (°) and brewing time of a tea soup;
FIG. 6 is a graph depicting a correlation between Brix value (°) and sensory perception of a tea soup for three different tea varieties;
FIG. 7 is a graph depicting a correlation between Brix value (°) and pH of a tea soup;
FIG. 8 is a graph depicting a correlation between Brix value (°) and electrical conductivity of a tea soup;
FIG. 9 is a flowchart of a method of monitoring a tea soup brewing process in accordance with an example embodiment;
FIG. 10 schematically depicts a cross-sectional view of a tea brewing apparatus according to another example embodiment;
FIG. 11 schematically depicts a cross-sectional view of a tea brewing apparatus according to yet another example embodiment;
FIG. 12 schematically depicts a cross-sectional view of a tea brewing apparatus according to yet another example embodiment;
FIG. 13 schematically depicts a cross-sectional view of a tea brewing apparatus according to yet another example embodiment; and
FIG. 14 schematically depicts a cross-sectional view of a tea brewing apparatus according to yet another example embodiment.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

In the context of the present application, the terms tea and tea soup are used interchangeably and both refer to the aqueous solution infused with tea extracts, that is, the brewing liquid obtained when water of a certain temperature is brought into contact with tea leaves. Such contact may be achieved in any suitable manner. For example, the tea leaves may be released freely into the brewing liquid or the tea leaves may be contained in some holder, such as a holder forming part of the tea brewing apparatus or a separate holder such as a tea egg or tea bag.

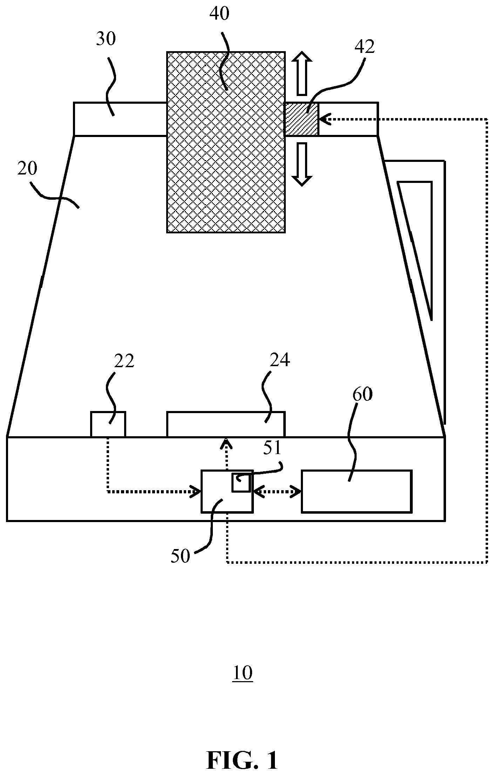

FIG. 1 schematically depicts a cross-sectional view of a tea brewing apparatus 10 according to an example embodiment of the present invention. Such a tea brewing apparatus 10 for example may be a smart kettle such as a nourishing kettle or the like. The tea brewing apparatus 10 comprises a brewing compartment 20 in which tea may be brewed. Access to the brewing compartment 20 maybe achieved in any suitable manner, such as for example by means of a removable lid 30 on the brewing compartment 20 or through a spout (not shown) in fluid communication with the brewing compartment 20. During the brewing process of tea with the tea brewing apparatus 10, the brewing compartment 20 typically holds tea leaves for infusing the tea soup with the chemical components that are extracted from the tea leaves in this brewing process. The tea leaves may be placed directly into the brewing compartment 20, e.g. in a vessel such as a tea egg or tea bag order brewing compartment 20 may comprise a tea leaf holder 40 in which the tea leaves may be placed. Such a tea leaf holder 40 may take any suitable shape such as the shape of a basket or the like and may be mounted relative to the brewing compartment 20 in any suitable manner. For example, the tea leaf holder 40 may be mounted in the lid 30 in a retractable manner, that is, the tea leaf holder 40 may be inserted into and retracted from the tea soup in the brewing compartment in order to initiate and terminate a tea brewing process.

The tea brewing apparatus 10 further comprises a sensor 22 within the brewing compartment 20 for sensing the concentration of one or more solutes within the tea soup in the brewing compartment 20. In order to ensure physical contact between the sensor 22 and the tea soup, the sensor 22 preferably is located at or near the bottom or floor of the brewing compartment 20. The sensor 22 is communicatively coupled to a controller 50 of the tea brewing apparatus 10, which controller 50 may take any suitable form, e.g. a microprocessor, processor or the like. The controller 50 may comprise or be communicatively coupled to a data storage device 51 such as a memory, look up table or the like in which target values of the parameter sensed by the sensor 22 are stored. The tea brewing apparatus 10 further comprises a user interface 60 communicatively coupled to the controller 50 through which a user may select a particular target value of this parameter. Typically, the user interface 60 presents a user of the tea brewing apparatus 10 with a tea strength selection menu for allowing the user to specify a desired strength of the tea soup, based on which user selection the controller 50 retrieves the appropriate target value from the data storage device 51. The user interface 60 may take any suitable shape, such as one or more dials, buttons, switches, touch screens, and so on, or any combination thereof. The tea brewing apparatus 10 may further comprise a heating element 24 thermally coupled to the brewing compartment 20. For example, the heating element 24 may be located within the brewing compartment 20. The heating element 24 may take any suitable shape or form and is typically controlled by the controller 50.

In a preferred embodiment, the sensor 22 is adapted to sense a Brix value of the tea soup within the brewing compartment 20. It should be understood that in the context of the present invention, the Brix value is an expression of the total solute concentration of the tea soup within the brewing compartment 20. Where reference is made to such a Brix value, it should be understood that analogous values, such as a Pluto value of the tea soup, are also intended to be covered by the term Brix value. Generally speaking, where reference is made to a Brix value, this is intended to cover any parameter that can be used to approximate a total solute concentration in the tea soup. Preferably, the sensor 22 is a Brix sensor although this is not strictly necessary as will be explained in further detail below. Brix sensors are well-known per se. For example, sensors capable of measuring a Brix value include hydrometers, pycnometers, refractometers and density sensors. Any suitable sensor for measuring a Brix value may be used in the context of the present application.

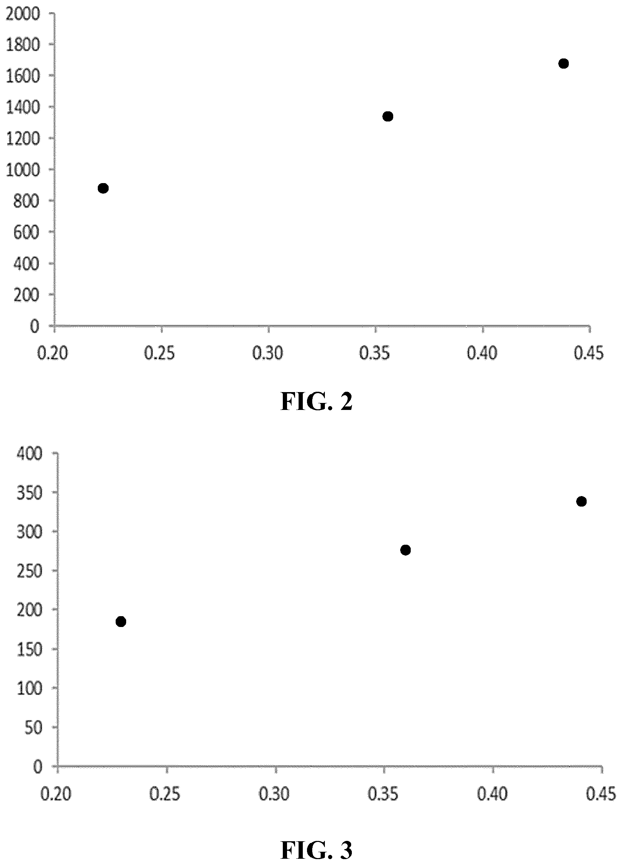

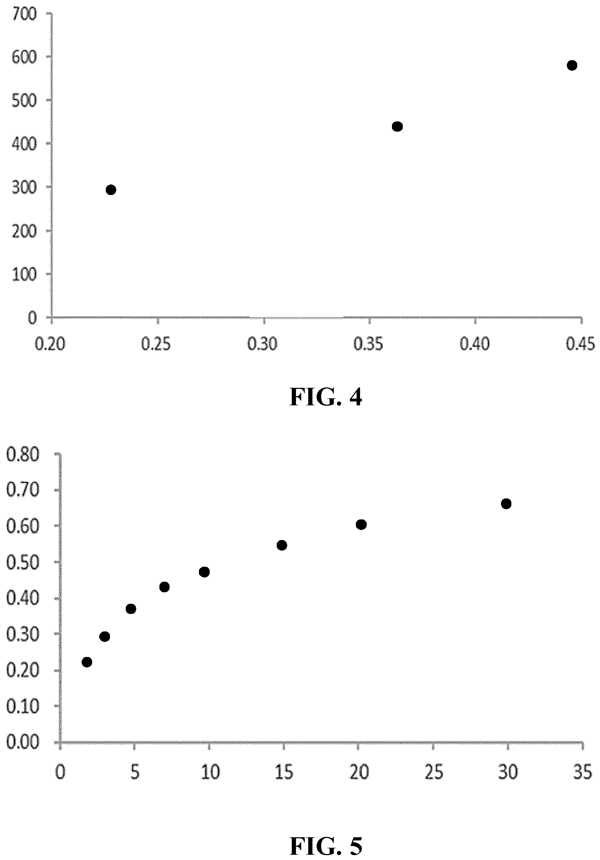

At least some embodiments of the invention are at least in part based on the insight that the Brix value of the tea soup can be used to accurately predict the strength and taste of the tea soup. For example, as depicted in FIG. 2, a correlation exists between the Brix value (°, x-axis) and the concentration of polyphenols (mg/kg, y-axis) in the tea soup, whereas FIG. 3 depicts the correlation between the Brix value (°, x-axis) and the concentration of caffeine (mg/kg, y-axis) in the tea soup and FIG. 4 depicts the correlation between the Brix value (°, x-axis) and the concentration of free amino acids (mg/kg, y-axis) in the tea soup. These graphs clearly show that the Brix value shows an almost perfect linear correlation with the concentrations of these solutes in a tea soup brewed at 60°C. Moreover, FIG. 5 depicts the Brix value (°, y-axis) as a function of brewing time (min., x-axis) for a tea soup brewed at 60°C, which clearly demonstrates that the increased strength of the tea soup resulting from longer brewing times is clearly reflected by an increased Brix value, thereby demonstrating that the Brix value may be used as a reliable indicator of tea strength.

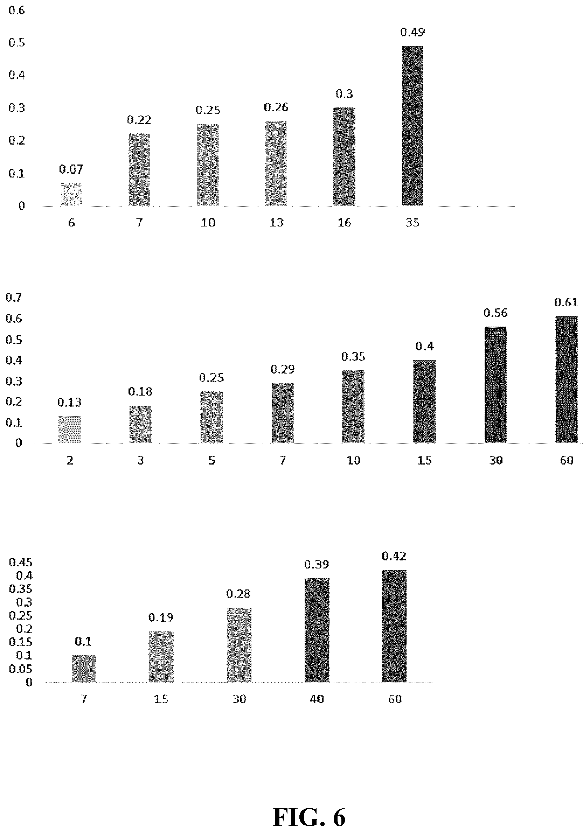

Another important advantage of sensing a Brix value with the sensor 22 is shown in FIG. 6, which depicts three bar charts of Brix value (°, y-axis) as a function of brewing time (min., x-axis) for three different tea varieties. The shading of the bars represents taste perception, with increasing darkness of the bar corresponding to an increased strength perception of the tea soup by a user drinking the tea soup after the indicated brewing duration. The top graph depicts green tea, the middle graph depicts black tea and the bottom graph depicts oolong tea. The strength perception of these teas is largely independent of tea variety, as for each of these tea varieties a light brew corresponded to a Brix value of 0.2-0.3, a medium brew corresponded to a Brix value of 0.3-0.4 and a strong brew corresponded to a Brix value of 0.4-0.5. The actual sensed Brix values for each tea soup are indicated above each bar in these graphs. For each tea variety, a tea soup having a Brix value in excess of 0.5 was perceived as unpleasant, acrid or bitter tasting, whereas a tea soup having a Brix value of less than 0.2 was perceived as too weak and/or tasteless. Hence, in an embodiment, the tea strength selection menu of the user interface 60 may include a weak tea strength option corresponding to the Brix target value being in a range of 0.2-0.3, a normal or medium tea strength option corresponding to the Brix target value being in a range of 0.3-0.4 and a strong tea strength option corresponding to the Brix target value being in a range of 0.4-0.5. These target values for instance maybe stored in the data storage device 51 as previously explained.

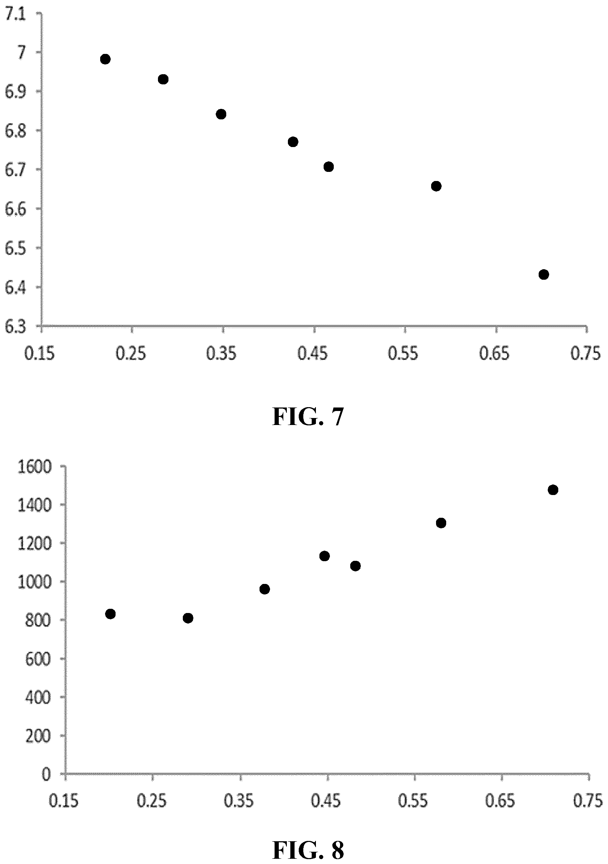

However, embodiments of the present invention are not limited to the sensor 22 being a Brix sensor. It has been found that pH and electrical conductivity of the tea soup may also be used to monitor the strength of the tea soup. This is for instance evident from FIG. 7, which depicts the pH (y-axis) of a green tea soup as a function of Brix value (°, x-axis) and FIG. 8, which depicts the electrical conductivity (µS/cm, y-axis) of a green tea soup as a function of Brix value (°, x-axis). As there is a clear correlation between the pH and Brix value of the tea soup as well as between the electrical conductivity and the Brix value of the tea soup, and it has previously been established that the Brix value of the tea soup can be used to express the strength of the tea soup, it follows that the pH and electrical conductivity of the tea soup therefore also can be used as an expression of the strength of the tea soup. Therefore, the sensor 22 alternatively maybe a pH sensor or an electrical conductivity sensor. As will be immediately apparent to the skilled person, the target value of the parameter sensed with the sensor 22 may be expressed as a Brix value, i.e. the sensed pH or electrical conductivity may be converted into a Brix value by the controller 50 using a predetermined conversion algorithm or formula, or the target value of the parameter sensed with the sensor 22 maybe used without conversion, i.e. the controller 50 may rely on reference values expressed as pH or electrical conductivity to determine if the sensed parameter of the brewed tea soup has reached its target value.

It is noted at this point that when using a pH sensor or an electrical conductivity sensor, the target value of the sensed parameter is also a function of tea variety and brewing temperature of the tea soup. Therefore, in an embodiment the user interface 60 may further comprise a tea type selection menu for allowing a user to specify a tea type (i.e. variety). In this embodiment, the controller 50 is adapted to obtain the target value of the parameter based on the desired strength of the tea soup and the tea type specified by the user through the user interface 60. As explained before, the controller 50 may obtain the target value from the data storage device 51. In contrast, the specification of a tea variety with the user interface 60 may be unnecessary when the sensor 22 is a Brix sensor, as it has been demonstrated above that the relationship between the Brix value and the perceived taste or strength of a tea soup is largely independent of the tea variety used to brew the tea soup.

Another advantage of the use of a Brix sensor 22 in the tea brewing apparatus is that the absolute value of the sensed parameter may be used for comparison against the target value as retrieved by the controller 50 from the data storage device 51 as the Brix value is largely independent of the properties of the water used to brew the tea, such as water hardness and pH. In contrast, when sensing pH or electrical conductivity, it is preferred to monitor a change in the sensed pH or electrical conductivity rather than the absolute value of the pH or electrical conductivity given that the absolute values of these parameters are typically sensitive to water properties such as pH and hardness. Of course, if so desired, the Brix value monitored with the controller 50 may be monitored as a change in the initial Brix value of the tea soup at the start of the brewing process, or, the pH or electrical conductivity may be monitored with the controller 50 as absolute values although in the latter scenario this is likely to reduce the accuracy of the control over the strength and taste of the tea soup brewed with the tea brewing apparatus 10.

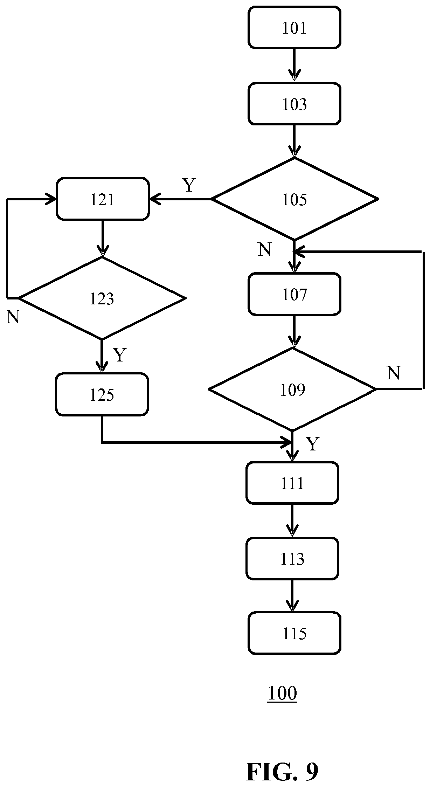

A method of monitoring the brewing process of a tea soup with the tea brewing apparatus 10 will now be explained in further detail with the aid of FIG. 9, which depicts a flowchart of this method 100. The method 100 starts in operation 101, in which the user of the tea brewing apparatus 10 may put an appropriate amount of water and tea leaves in the tea brewing apparatus 10. In an example embodiment, the tea brewing apparatus 10 through its user interface 60 may instruct a user to add the amount of water and tea leaves in a defined ratio such as the ratio within a range of tea leaves to water of 1:10 - 1:100 by weight, preferably in a ratio of 1:50 by weight to ensure that a tea soup is brewed having the desirable strength and taste.

After adding the ingredients to the brewing compartment 20 of the tea brewing apparatus 10, the user may initiate the tea brewing process by pressing start button or the like of the user interface 60 causing the method 100 to proceed to operation 103 in which the tea soup is brewed. To this end, the controller 50 may control the heating element 24 to maintain the tea soup at a defined temperature during this brewing process. For example, the defined temperature may be in a range of 30-65°C. It has been found that 20 is brewed at a temperature within this range, a balanced release of polyphenols, caffeine and free amino acids is achieved, which may improve the taste perception of the tea brewed in this manner. If the tea is brewed at higher temperatures, the release of these chemical compounds may occur at increasingly different rates, which may compromise the overall taste of the brewed tea. The brewing temperature of the tea soup may be predefined in the controller 50. Alternatively, the user interface 60 may comprise a temperature of selection menu allowing a user to select the brewing temperature of the tea soup.

The method 100 may further comprise operation 105 in which a user may personalize the target value of the parameter monitored with the sensor 22 such that the tea soup may be brewed according to the personal taste of the user of the tea brewing apparatus 10. It is noted that this operation is optional; the target value of the sensed parameter as used by the controller 50 to determine if the brewing process may be terminated may be preprogrammed into the tea brewing apparatus 10, e.g. into the data storage device 51, but in some embodiments this target value maybe (re-)programmable, e.g. overwritten, through the user interface 60. To this end, the user may select an option on the user interface 60 indicating that the user wishes to personalize the target value(s) used by the controller 50 to monitor the tea brewing process. If the user invokes this option, the method 100 proceeds to operation 121 in which the user is expected to periodically taste the tea soup during its brewing process and indicate in operation 123, e.g. using the user interface 60, if the desired taste has been obtained. To assist the user in this personalization process, the controller 50 may control the user interface 60 or a sensory output generation device 70 to periodically generate an alert such as a visible or audible alert alerting the user to sample the tea soup being brewed in the brewing compartment 20. If the desired taste has not yet been obtained, the method 100 returns to operation 121. On the other hand, if the user indicates in operation 123 that the desired taste of the tea soup has been obtained, the method 100 proceeds to operation 125 in which the actual value of the parameter sensed with the sensor 22 is obtained with the controller 50 and stored as the target value of the parameter, e.g. in the data storage device 51. It should be understood that this personalization embodiment of the method 100 of course maybe repeated for the different tea strengths that can be selected through the user interface 60.

If optional operation 105 is not invoked by the user, the method 100 proceeds to operation 107 in which the actual value of the parameter sensed with the sensor 22 is periodically or continuously determined with the controller 50 and compared in operation 109 against the target value of this parameter for the tea strength selected by the user with the user interface 60 in operation 101. If it is determined in operation 109 that this target value has not yet been reached, the method 100 returns to previously described operation 107 until the actual value of the parameter as sensed with the sensor 22 has reached its target value. Once the actual value of this parameter has reached its target value as determined in operation 109, the method 100 proceeds to operation 111 in which the controller 50 generates a signal signalling the completion of the brewing process of the tea. This signal may serve a number of different purposes. In a first set of embodiments, the tea brewing apparatus 10 may comprise an automated mechanism responsive to the signal for terminating the physical contact between the tea soup and the tea leaves in the brewing compartment 20. For example, in the tea brewing apparatus as schematically depicted in FIG. 1, the retractable holder 40 of the tea leaves maybe motorized by a motor 42 under control of the controller 50, which motor 42 is responsive to the aforementioned signal such that upon generation of the signal the motor 42 is engaged and retracts the holder 40 from the tea soup in the brewing compartment 20. The motor 42 and the retraction mechanism may be implemented in any suitable fashion as will be immediately apparent to the skilled person. The motor 42 may be located in any suitable location within the tea brewing apparatus 10, such as in the lid 30 for example.

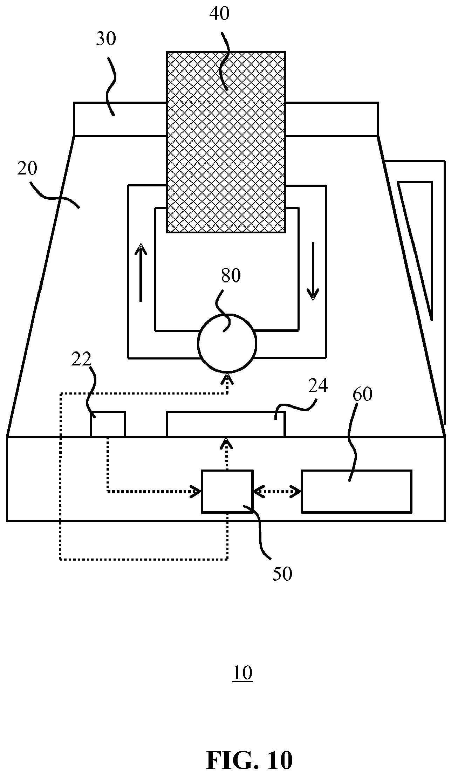

In an alternative example embodiment as schematically depicted in FIG. 10, the mechanism responsive to the signal for terminating the physical contact between the tea soup and the tea leaves in the brewing compartment 20 comprises a pump 80 responsive to the signal generated by the controller 50 arranged to pump the tea soup from the brewing compartment 20 through the holder 40 of the tea leaves. In this embodiment, the pump 80 is switched off by the signal such that upon the actual value of the sensed parameter reaching its target value the tea soup is no longer pumped through the holder 40 containing the tea leaves, thereby terminating the physical contact between the tea soup and the tea leaves and terminating the brewing process as a consequence.

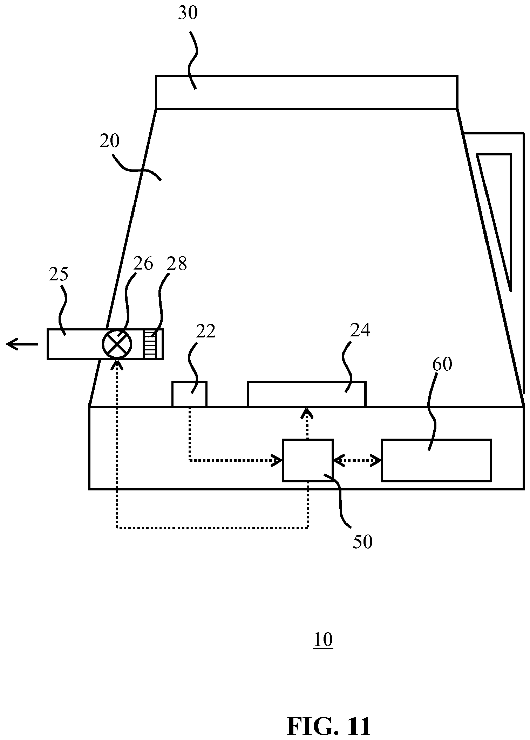

In yet another an alternative example embodiment as schematically depicted in FIG. 11, the mechanism responsive to the signal for terminating the physical contact between the tea soup and the tea leaves in the brewing compartment 20 comprises a conduit 25 including a valve 26 under control of the controller 50 arranged to drain the tea soup from the brewing compartment 20 into a vessel external to the tea brewing apparatus 10 such as a cup, mug, pot or the like. The conduit 25 may further comprise a filter or a strainer 28 upstream from the valve 26 to prevent tea leaves from escaping the brewing compartment 20 together with the tea soup. The valve 26 is responsive to the signal generated by the controller 50 in operation 111; in particular, the valve 26 opens in response to this signal in order to allow the tea soup to drain from the brewing compartment at the signalled end of the brewing process. It should be understood that the aforementioned embodiments of the mechanism responsive to the signal for terminating the physical contact between the tea soup and the tea leaves are shown by way of non-limiting example only and that many variations on these embodiments that are immediately apparent to the skilled person are also intended to be covered by the teachings of the present application. It furthermore should be understood that the controller 50 maybe further adapted to generate a further signal at the beginning of the brewing process in order to establish contact between the tea leaves and the tea soup to be brewed with the aforementioned mechanism. For example, the further signal may operate the motor 42 of the motorized holder 40 to lower the holder into the tea soup or may operate the pump 80 such as to engage or switch on the pump 80 in order to establish contact between the water (i.e. the tea soup to be brewed) in the brewing compartment 20 and the tea leaves in the holder 40.

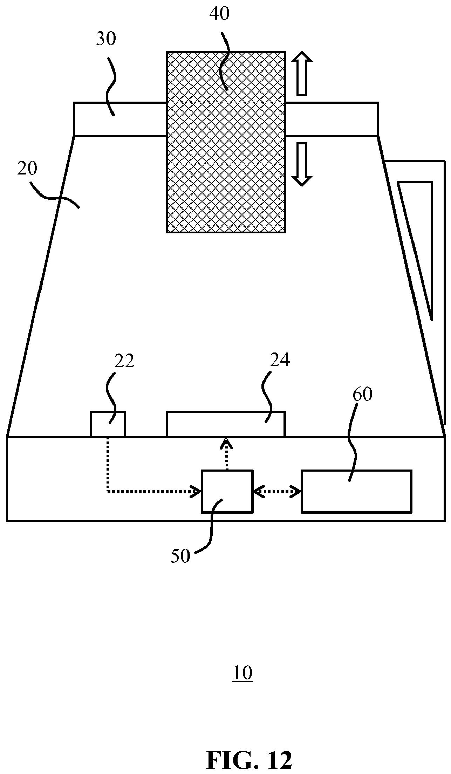

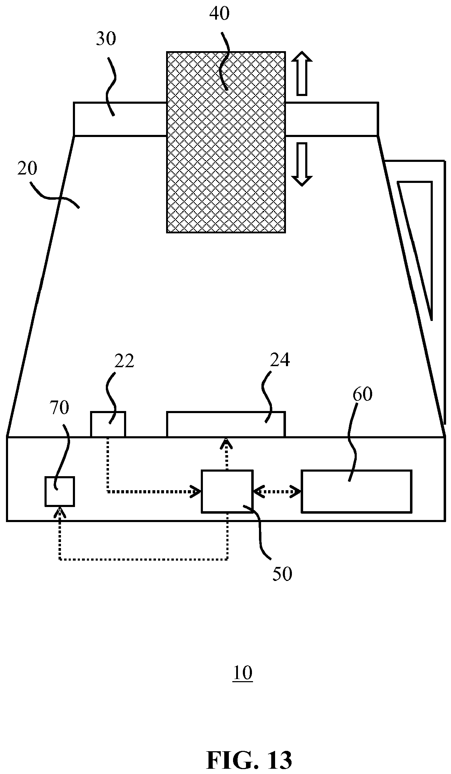

In a second set of embodiments, the signal generated by the controller in operation 111 may be used to alert the user of the tea brewing apparatus 10 to manually terminate the brewing process, e.g. by removing the tea leaves from the brewing compartment 20. In an example embodiment as schematically depicted in FIG. 12, this signal may be used to control the user interface 60 in order to generate a sensory output with the user interface 60, e.g. a visible or audible output, alerting the user to the fact that the tea soup in the brewing compartment has reached its desired strength or taste such that the user can remove the tea leaves from the brewing compartment 20, for example by manually retracting the holder 40 from the tea soup in case of the presence of such a holder 40. Of course, many other ways of removing the tea leaves from the brewing compartment 20, such as the removal of a tea bag or a tea egg or alternatively by draining the tea soup from the brewing compartment 20 are equally feasible. Alternatively, as schematically depicted in FIG. 13, the tea brewing apparatus 10 may further comprise a sensory output generation device 70 under control of the controller 50 that is responsive to the generated signal such that upon receiving the signal the sensory output generation device 70 generates the sensory output alerting the user to the fact that the tea soup in the brewing compartment 20 has reached its desired strength or taste such that the user can remove the tea leaves from the brewing compartment 20. Such a sensory output generation device 70 may take any suitable shape or form, such as one or more of a display, a light generating device such as a LED, a sound generating device such as a speaker, and so on.

Upon the generation of the signal signalling the end of the brewing process in operation 111, the method may proceed to optional operation 113 in which the controller 50 operates the heating element 24 in order to maintain the temperature of the brewed tea soup at a defined value, e.g. to ensure that the brewed tea is at a desirable drinking temperature. For example, the controller 50 may be adapted to control the heating element 24 such that the tea (soup) in the brewing compartment 20 is kept at a temperature of at least 50°C upon completion of the brewing process. In order to accurately control the temperature of the tea soup during and after its brewing process, the tea brewing apparatus 10 may further comprise a temperature sensor (not shown) within the brewing compartment 20 that is communicatively coupled to the controller 50 such that the controller 50 can operate the heating element in response to the actual temperature of the tea soup in the brewing compartment 20 as sensed with the temperature sensor. The method 100 may terminate in operation 115, for example when a user switches off the tea brewing apparatus 10.

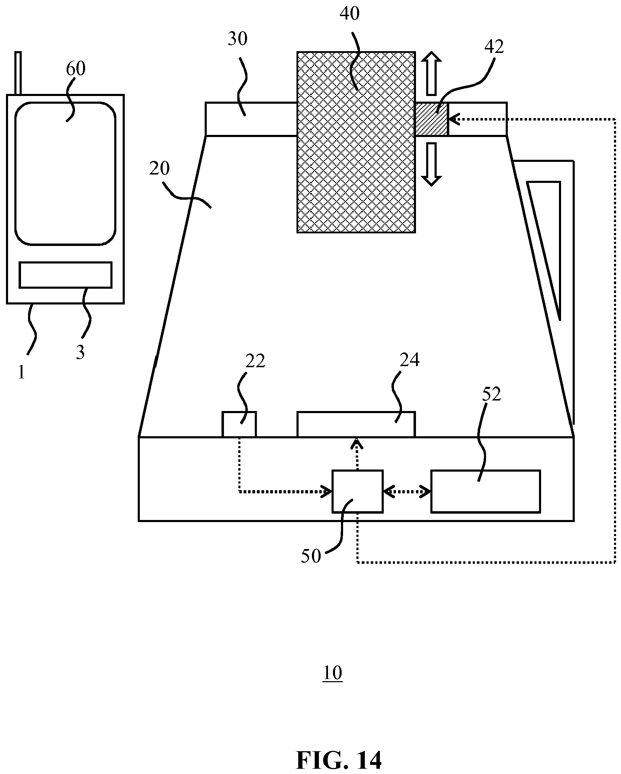

In the above described embodiments of the tea brewing apparatus 10, the apparatus is self-contained, that is, it contains all functionality required to implement the various embodiments of the present invention. However, in an alternative embodiment, a more distributed the brewing system is provided in which some of this functionality is implemented on a remote data communication device such as a mobile communication device, e.g. a smart phone, tablet computer or the like. This is schematically depicted in FIG. 14, in which the distributed system comprises the data communication device 1 in addition to the tea brewing apparatus 10. The data communication device 1 typically comprises a data communication interface 3 adapted to establish a data communication link with a data communication interface 52 of the tea brewing apparatus 40. Such a data communication link may be a direct or P2P connection, such as a Bluetooth connection for example or alternatively may be an indirect connection via a connection mediator such as a (wireless) router, server or the like, such as for example in the case of a WiFi connection, a wireless or wired Internet connection and so on.

The data communication device 1 typically implements at least the user interface 60 as previously described through which a user can select the strength of the tea to be brewed and optionally also tea variety and brewing temperature as previously explained. The user selection may be communicated to the tea brewing apparatus 10 through the aforementioned data communication link such that the controller 50 of the tea brewing apparatus 10 can receive the user selection via the data communication interface 52 to which the controller 50 is communicatively coupled, such that the controller 50 can retrieve the appropriate target value of the parameter to be monitored with the sensor 22 based on the received user selection as previously explained. Upon completion of the brewing process, the controller 50 may further generate a notification signal and transmit this notification signal to the data communication device 1 over the data communication link between this device and the tea brewing apparatus 10, which notification signal for example may be used at the data communication device 1 to generate a notification at the user interface 60 to notify the user that the brewing process has been completed. In this manner, a user may remotely operate the tea brewing apparatus 10, which for example may be desirable if the user wants to drink freshly brewed tea upon arrival at a location housing the tea brewing apparatus 10, such as the home or workplace of the user.

Of course, any of the previously described functionality of the tea brewing apparatus 10 that is performed by an entity that is not necessarily an integral part of the tea brewing apparatus 10 may be performed by the remote data communication device 1 instead. For example, the remote data communication device 1 may comprise a processor (not shown) adapted to perform the comparison between the actual value of the parameter as sensed with the sensor 22 and the target value of the parameter corresponding to the user selection of the desired strength of the tea soup brewed with the tea brewing apparatus 10. In such a scenario, the controller 50 of the tea brewing apparatus 10 may be a slave to the processor of the remote data communication device 1, with the controller 50 adapted to communicate the sensor data of the sensor 22 to the processor of the remote data communication device 1 of the previously described data communication link between the remote data communication device 1 and the tea brewing apparatus 10, wherein the evaluation of the sensor data and the generation of the previously described signal indicative of the end of the brewing process, that is, when the actual value of the sensed parameter has reached its target value, is performed in its entirety on the processor of the remote data communication device 1. In such a scenario, the signal maybe used to generate a sensory output signal indicative of the completion of the brewing process with the user interface 60 or another sensory output generation device (such as the sensory output generation device 70) or the signal may be relayed to the tea brewing apparatus 10 in order to allow the controller 50 to control the mechanism for terminating the physical contact between the tea soup and the tea leaves in the brewing compartment 20 as previously described. The remote data communication device 1 may be configured in order to perform such functions in any suitable manner, e.g. by the installation of a software program such as an app or the like.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A tea brewing apparatus (10) comprising:
a brewing compartment (20) for holding tea leaves;
a sensor (22) for sensing a parameter indicative of a concentration of one or more solutes in a tea soup within the brewing compartment;
a controller (50) communicatively coupled to the sensor; and
a user interface (60) communicatively coupled to the controller and comprising a tea strength selection menu for allowing a user to specify a desired strength of the tea soup;
wherein the controller is adapted to:
obtain a target value of said parameter based on the desired strength of the tea soup specified by the user;
monitor said parameter during a brewing process of said tea soup within the brewing compartment; and
generate a signal for signalling that the brewed tea soup has said desired strength when said parameter has reached said target value.

2. The tea brewing apparatus of claim 1, wherein said target value is programmable through said user interface (60).

3. The tea brewing apparatus (10) of claim 1 or 2, wherein the parameter is a Brix value, and wherein the parameter is indicative of the total concentration of solutes in the tea soup.

4. The tea brewing apparatus (10) of any of claims 1-3, wherein the tea strength selection menu includes a weak tea strength option corresponding to said target value being in a range of 0.2-0.3, a normal tea strength option corresponding to said target value being in a range of 0.3-0.4 and a strong tea strength option corresponding to said target value being in a range of 0.4-0.5.

5. The tea brewing apparatus (10) of any of claims 1-4, wherein the sensor (22) is a Brix sensor.

6. The tea brewing apparatus (10) of any of claims 1-4, wherein the sensor (22) is one of a pH sensor and an electrical conductivity sensor, and wherein the target value is a function of tea type and tea strength.

7. The tea brewing apparatus (10) of any of claims 1-6, wherein said user interface (60) further comprises a tea type selection menu for allowing a user to specify a tea type, and wherein the controller is adapted to obtain the target value of said parameter based on the desired strength of the tea soup and the tea type specified by the user.

8. The tea brewing apparatus (10) of any of claims 1-7, wherein said user interface (60) further comprises a temperature selection option for allowing a user to select a temperature at which said brewing process is performed, and wherein the target value further is a function of the selected temperature.

9. The tea brewing apparatus of any of claims 1-8, further comprising a heating element (24) thermally coupled to the brewing compartment (20) under control of the controller (50).

10. The tea brewing apparatus of claim 9, wherein the controller is adapted to maintain, with the heating element (24), a temperature of the tea soup:
- within a range of 30-65°C during the brewing process; and/ or
- at at least 50°C upon completion of the brewing process.

11. The tea brewing apparatus (10) of any of claims 1-10, wherein the controller (50) is adapted to generate a user instruction with the user interface (60) for instructing a user to add tea leaves and water to the brewing compartment (20) by weight in a ratio of 1:10 - 1:100, preferably in a ratio of 1:50.

12. The tea brewing apparatus (10) of any of claims 1-11, further comprising a mechanism for separating the tea leaves from the tea soup responsive to said signal.

13. The tea brewing apparatus of claim 12, wherein said mechanism comprises a motorized retractable tea leaf holder (40), and wherein said signal causes the motorized retraction of the tea leaf holder from the tea soup in the brewing compartment (20).

14. A method of monitoring a tea brewing process of a tea brewing apparatus (10) comprising a brewing compartment (20) for holding tea leaves and a sensor (22) for sensing a parameter indicative of a concentration of one or more solutes in a tea soup within the brewing compartment, the method comprising:
obtaining a target value of said parameter based on a desired strength of the tea soup specified by a user;
receiving a value of said parameter from said sensor during a brewing process of said tea soup within the brewing compartment; and
generating a signal for signalling that the brewed tea soup has said desired strength when the value of said parameter has reached said target value.

15. The method of claim 14, wherein:
the sensor (22) is a Brix sensor; or
the sensor (22) is one of a pH sensor and an electrical conductivity sensor and wherein the target value is a function of tea type and tea strength.
